# FASCICULE DE BREVET EUROPEEN

(11) **EP 4 442 507 B1**
(45) Date de publication et mention de la délivrance du brevet: **12.11.2025**
(21) Numéro de dépôt: 24168367.1
(22) Date de dépôt: 04.04.2024
(51) Int. Cl.: B60P 7/08, B60P 7/13, B65D 88/12, B65F 1/00

(54) **PLATEAU DE TRANSPORT COMPORTANT DES MOYENS DE VERROUILLAGE DE CHARGES SUR LE PLATEAU DE TRANSPORT**
TRANSPORTPLATTE MIT MITTELN ZUR VERRIEGELUNG VON LASTEN AUF DER TRANSPORTPLATTE
TRANSPORT TRAY WITH MEANS FOR LOCKING LOADS ON THE TRANSPORT TRAY

(30) Priorité: 06.04.2023 FR 2303437
(43) Date de publication de la demande: 09.10.2024
(73) Titulaire: AZ Métal, 22100 Quévert (FR)
(72) Inventeur: LE TIEC, Ronan, 22100 QUEVERT (FR); THIEVIN, Olivier, 22100 QUEVERT (FR)
(74) Mandataire: Cabinet Le Guen Maillet

(56) Documents cités:
- EP-A1- 2 796 389
- DE-C1- 4 303 349
- DE-U1- 9 113 145
- US-A1- 2012 025 590
- US-B2- 9 540 106

## Description

### DOMAINE TECHNIQUE DE L'INVENTION

La présente invention concerne un plateau de transport qui comporte un système de verrouillage qui permet de verrouiller et de libérer des charges disposées sur le plateau de transport.

### ÉTAT DE LA TECHNIQUE ANTÉRIEURE

Dans le cadre du transport de conteneurs, il est connu de charger les charges sur un plateau de transport qui peut être une partie intégrante d'une remorque d'un camion ou un élément amovible qui se charge ensuite sur la remorque du camion.

Pour éviter la chute des charges depuis le plateau de transport, il est connu de mettre en place des systèmes de verrouillage qui verrouillent chaque charge sur le plateau de transport.

Les systèmes de verrouillage sont relativement encombrants et complexes et il est donc nécessaire de trouver un système de verrouillage qui verrouille et libère tous les conteneurs d'un seul coup et qui soit relativement simple à mettre en œuvre. DE 91 13 145 U1 décrit un plateau similaire au préambule de la revendication 1.

### EXPOSÉ DE L'INVENTION

Un objet de la présente invention est de proposer un plateau de transport sur lequel sont chargées des charges et qui comporte un système de verrouillage qui verrouille et libère les charges du plateau de transport.

À cet effet, est proposé un plateau de transport présentant une direction longitudinale et comportant :
- un châssis sur lequel est arrangée une zone de stockage pour au moins une charge comportant au moins une barre de fixation,
- pour la ou chaque barre de fixation, au moins un système d'accrochage mobile entre une position verrouillée dans laquelle le système d'accrochage verrouille la barre de fixation en l'empêchant de se déplacer vers le haut ou vers le bas, une position intermédiaire dans laquelle le système d'accrochage ne verrouille pas la barre de fixation en l'autorisant à se déplacer vers le bas mais en l'empêchant de se déplacer vers le haut, et une position déverrouillée dans laquelle le système d'accrochage déverrouille la barre de fixation en l'autorisant à se déplacer vers le haut et vers le bas,
- un système d'actionnement destiné à être actionné par un utilisateur et mobile entre une première position, une deuxième position et une troisième position, et
- un système de transmission arrangé pour déplacer le ou chaque système d'accrochage en position verrouillée lorsque le système d'actionnement est en première position, en position intermédiaire lorsque le système d'actionnement est en deuxième position et en position déverrouillée lorsque le système d'actionnement est en troisième position.

Avantageusement, chaque système d'accrochage comporte un loquet, un élément de rappel et un dispositif de blocage commandé par le système d'actionnement, où le loquet présente une première extrémité montée mobile en rotation sur le châssis autour d'un premier axe de rotation parallèle à la direction longitudinale et une deuxième extrémité arrangée pour accrocher une barre de fixation, où le loquet est mobile entre une position en prise correspondant à la position verrouillée et une position relâchée correspondant à la position déverrouillée, où le dispositif de blocage est mobile entre une première position de blocage correspondant à la première position dans laquelle il bloque le loquet en position en prise, une deuxième position de blocage correspondant à la troisième position dans laquelle il bloque le loquet en position relâchée, et une position libre correspondant à la deuxième position dans laquelle il laisse libre le déplacement du loquet entre la position en prise et la position relâchée, et où, en position libre, l'élément de rappel force le loquet vers la position en prise.

Selon un mode de réalisation particulier, le système de transmission comporte une tige principale mobile en rotation par rapport au châssis autour d'un troisième axe de rotation parallèle à la direction longitudinale, et chaque dispositif de blocage comprend une barrette solidaire de la tige principale, un dispositif d'entraînement comportant au moins une biellette avec une première extrémité montée mobile en rotation sur le loquet autour d'un quatrième axe de rotation parallèle à la direction longitudinale et une deuxième extrémité traversée par un trou oblong, où la barrette présente un arbre logé dans le trou oblong. Selon un mode de réalisation particulier, le système de transmission comporte une tige principale mobile en rotation par rapport au châssis autour d'un troisième axe de rotation parallèle à la direction longitudinale, et chaque dispositif de blocage comprend une barrette solidaire de la tige principale, un dispositif d'entraînement comportant au moins une biellette avec une première extrémité montée mobile en rotation sur la barrette autour d'un quatrième axe de rotation parallèle à la direction longitudinale et une deuxième extrémité traversée par un trou oblong, où le loquet présente un arbre logé dans le trou oblong. Avantageusement, le système d'actionnement est une poignée montée mobile en rotation sur le châssis autour d'un deuxième axe de rotation parallèle à la direction longitudinale, et le châssis présente pour chaque position première, deuxième ou troisième, une découpe dans laquelle la poignée loge lorsqu'elle est dans ladite position.

### BRÈVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
Fig. 1 est une vue en perspective d'un plateau de transport selon l'invention avec des charges ,
Fig. 2 est une vue en perspective du plateau de transport de la Fig. 1 sans les charges,
Fig. 3 est un agrandissement du détail III de la Fig. 2,
Fig. 4 est un agrandissement du détail IV de la Fig. 2,
Fig. 5 est une vue d'un système de transmission en position verrouillée,
Fig. 6 est une vue d'un système d'accrochage en position verrouillée,
Fig. 7 est une vue du système de transmission en position intermédiaire,
Fig. 8 est une vue d'un système d'accrochage en position intermédiaire,
Fig. 9 est une vue du système de transmission en position libre, et
Fig. 10 est une vue d'un système d'accrochage en position libre.

### EXPOSÉ DÉTAILLÉ DE MODES DE RÉALISATION

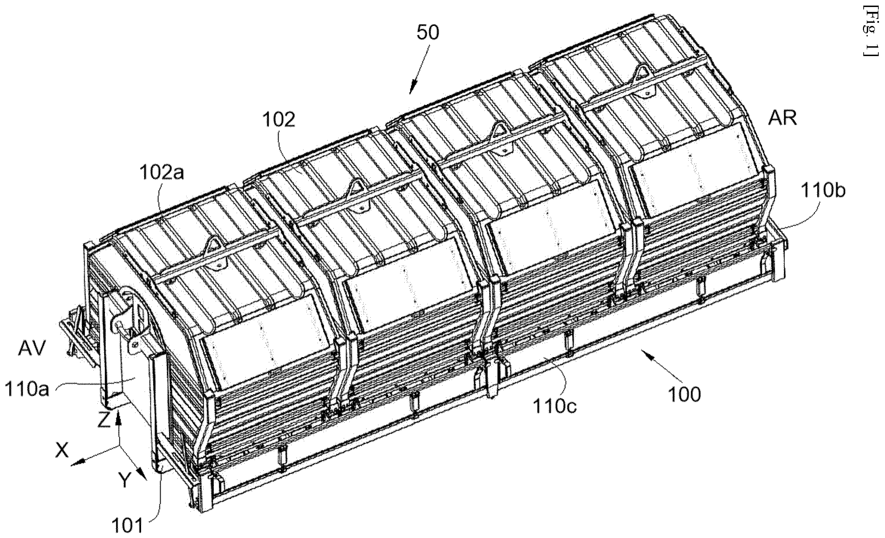

Dans la description qui suit, et par convention, on appelle X la direction longitudinale du plateau de transport, on appelle Y la direction transversale, et Z la direction verticale, ces trois directions X, Y et Z étant orthogonales entre elles. Dans la description, les termes relatifs à une position sont pris en référence à un plateau de transport tel que représenté à la Fig. 1 où l'avant est représenté par les lettres AV et l'arrière par les lettres AR.

La Fig. 1 montre un plateau de transport 100 qui est ici du type plateau Ampliroll^{®} qui est prévu pour être chargé à l'arrière d'un camion équipé d'un bras élévateur, mais qui peut prendre une autre forme et il peut même être intégré à une remorque d'un camion.

Le plateau de transport 100 est chargé d'au moins une charge 102. Dans le mode de réalisation de l'invention présenté à la Fig. 1, il y a quatre charges 102 qui sont déposées sur le plateau de transport 100 et chaque charge prend ici la forme d'un conteneur.

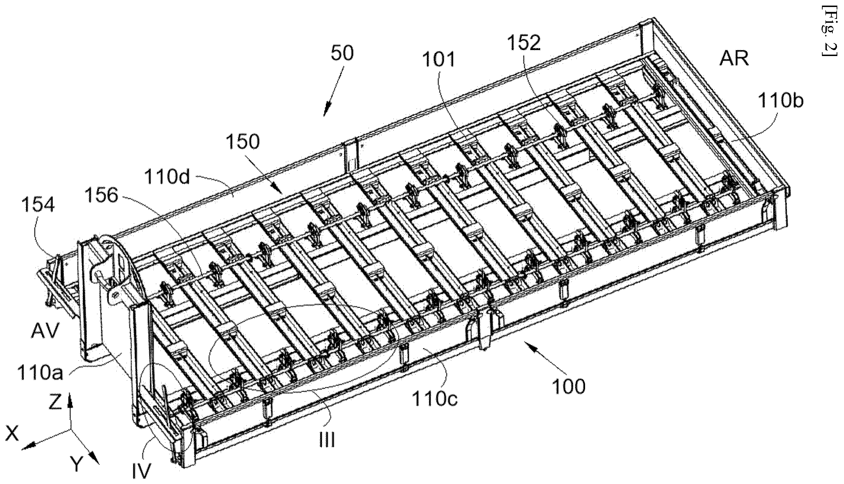

La Fig. 2 montre le plateau de transport 100 sans les charges 102.

Le plateau de transport 100 présente un châssis 101 constitué ici de poutres parallèles à la direction longitudinale X, c'est-à-dire parallèles à la longueur du plateau de transport 100, et de poutres parallèles à la direction transversale Y, c'est-à-dire parallèles à la largeur du plateau de transport 100.

Le plateau de transport 100 comporte une zone de stockage 50 qui s'étend sur le châssis 101 et sur laquelle sont déposées les charges 102.

Le plateau de transport 100 comporte ici une paroi frontale 110a, une paroi arrière 110b et deux parois latérales 110c-d qui sont solidaires du châssis 101 et qui s'étendent sur la périphérie du plateau de transport 100. Les parois 110a-d délimitent ensemble la zone de stockage 50.

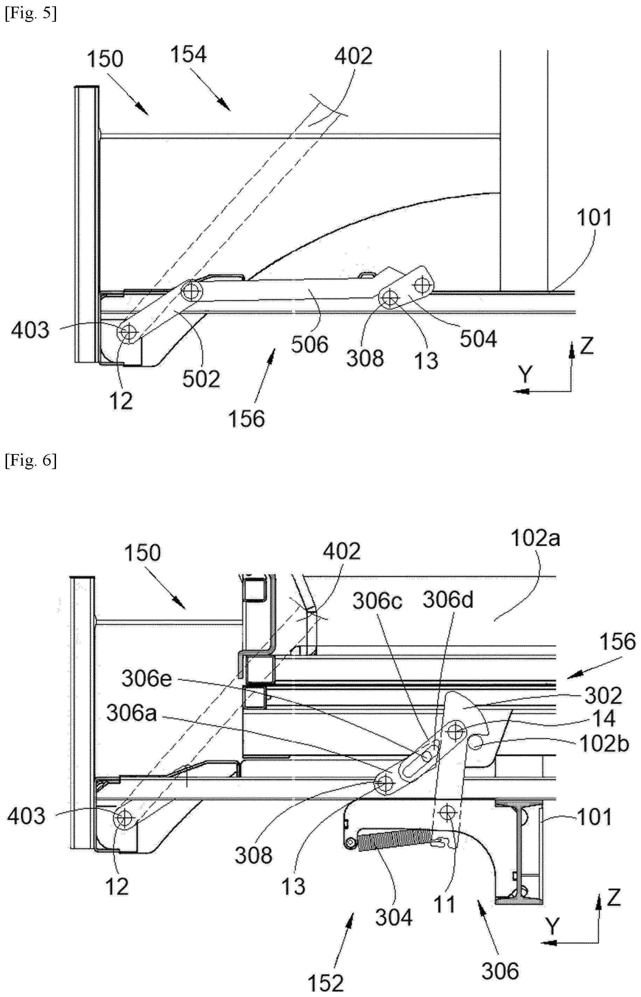

Chaque charge 102 comporte une structure 102a et, sous la structure 102a, au moins une barre de fixation 102b (Figs. 6, 8 et 10) qui est solidaire de la structure 102a et qui s'étend ici parallèlement à la direction longitudinale X.

Le plateau de transport 100 comporte également au moins un système de verrouillage 150 qui comporte, pour la ou chaque barre de fixation 102b, au moins un système d'accrochage 152.

Le système de verrouillage 150 comporte également un système d'actionnement 154 destiné à être actionné par un utilisateur et un système de transmission 156 arrangé pour transmettre les déplacements du système d'actionnement 154 à chaque système d'accrochage 152.

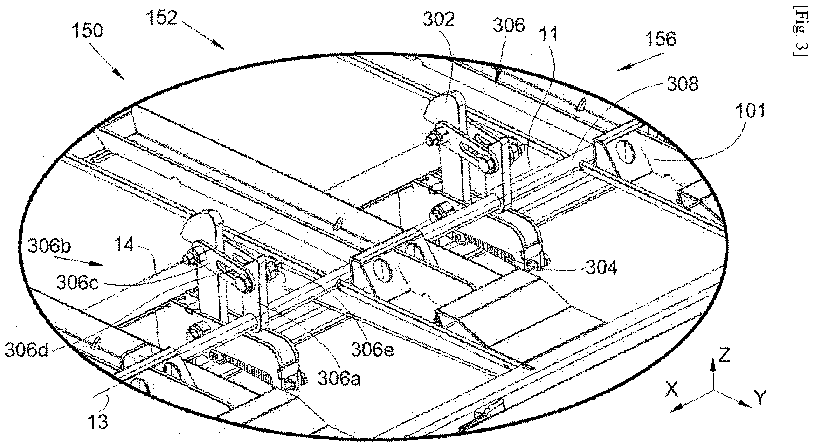

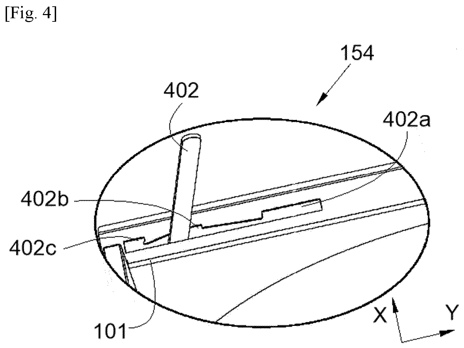

La Fig. 3 montre des systèmes d'accrochage 152 et la Fig. 4 montre le système d'actionnement 154 qui est actionné par un utilisateur et mobile entre une première position, une deuxième position et une troisième position.

Les Figs. 5, 7 et 9 montrent différentes positions du système d'actionnement 154 et du système de transmission 156 et les Figs. 6, 8 et 10 montrent différentes positions du système d'accrochage 152 et du système de transmission 156.

Les Figs. 5 et 6 montrent une position verrouillée dans laquelle le système d'accrochage 152 verrouille la barre de fixation 102b en l'empêchant de se déplacer vers le haut ou vers le bas.

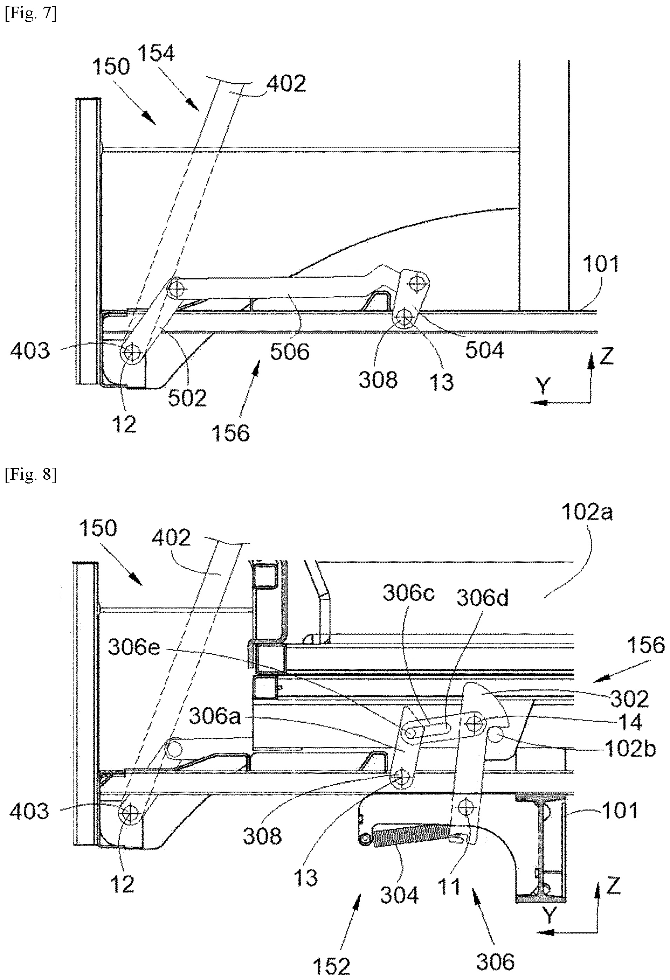

Les Figs. 7 et 8 montrent une position intermédiaire dans laquelle le système d'accrochage 152 ne verrouille pas la barre de fixation 102b mais où le système d'accrochage 152 empêche le déplacement de la barre de fixation 102b associée vers le haut pour empêcher le retrait de la charge 102 et où le système d'accrochage 152 autorise le déplacement de la barre de fixation 102b associée vers le bas pour permettre la dépose de la charge 102 sur le plateau de transport 100.

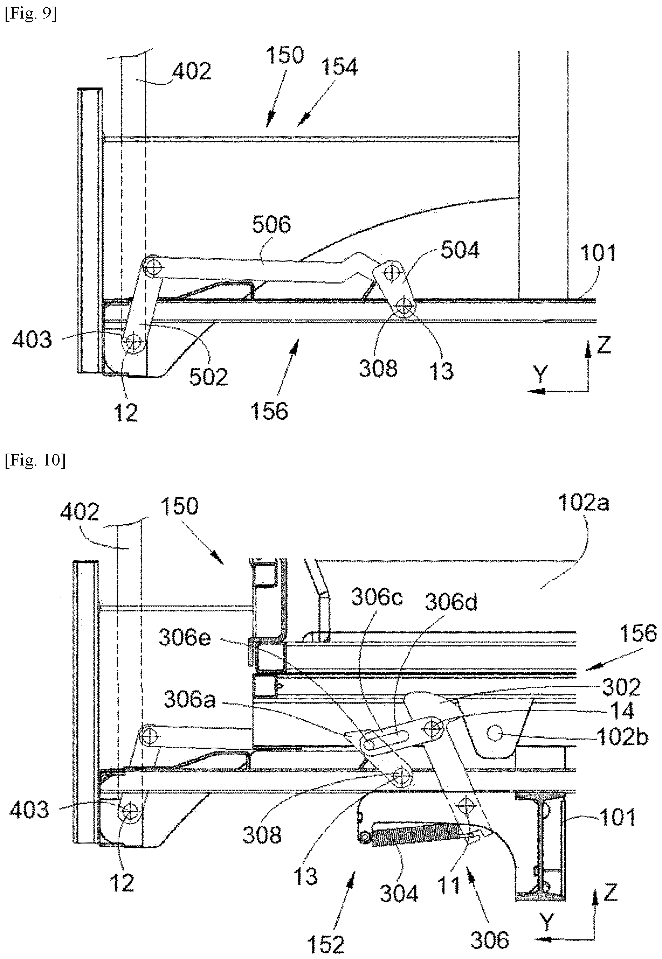

Les Figs. 9 et 10 montrent une position déverrouillée dans laquelle le système d'accrochage 152 déverrouille la barre de fixation 102b en l'autorisant à se déplacer vers le haut et vers le bas pour autoriser le retrait de la charge 102 et/ou la dépose de la charge 102 sur le plateau de transport 100.

Dans le mode de réalisation de l'invention présenté à la Fig. 2, il y a un système de verrouillage 150 par côté du plateau de transport 100, c'est-à-dire qu'il y en a un à bâbord et un à tribord. Il y a donc ici un système d'actionnement 154 et un système de transmission 156 par côté et il y a des systèmes d'accrochage 152 à bâbord et à tribord pour verrouiller les deux côtés de chaque charge 102. Mais dans un autre mode de réalisation non représenté, il est possible de garder des systèmes d'accrochage 152 à bâbord et à tribord tout en ayant un seul système d'actionnement 154 pour les deux côtés et un système de transmission 156 commun.

Le système de transmission 156 est arrangé pour déplacer le ou chaque système d'accrochage 152 en position verrouillée lorsque le système d'actionnement 154 est en première position, en position intermédiaire lorsque le système d'actionnement 154 est en deuxième position et en position déverrouillée lorsque le système d'actionnement 154 est en troisième position.

Avec un tel arrangement, la mise en place, le retrait et le verrouillage des charges 102 sont simples à mettre en œuvre.

Chaque système d'accrochage 152 comporte un loquet 302 qui présente une première extrémité montée mobile en rotation sur le châssis 101 autour d'un premier axe de rotation 11 par une liaison pivot avec le châssis 101. Le premier axe de rotation 11 est parallèle à la direction longitudinale X et une deuxième extrémité d'un loquet 302 est crochue de manière à pouvoir accrocher une barre de fixation 102b. La partie crochue s'étend ici parallèlement à la direction transversale Y.

Le loquet 302 est ainsi mobile en rotation alternativement entre une position en prise correspondant à la position verrouillée où sa deuxième extrémité est au-dessus d'une barre de fixation 102b pour la maintenir et une position relâchée correspondant à la position déverrouillée où sa deuxième extrémité est décalée transversalement par rapport à la barre de fixation 102b pour la laisser passer. En position intermédiaire, le loquet 302 garde la même position qu'en position en prise même s'il peut se déplacer comme cela est expliqué ci-dessous.

Chaque système d'accrochage 152 comporte un dispositif de blocage 306 qui est mobile entre une première position de blocage correspondant à la première position (position verrouillée) dans laquelle il bloque le loquet 302 en position en prise, une deuxième position de blocage correspondant à la troisième position (position déverrouillée) dans laquelle il bloque le loquet 302 en position relâchée, et une position libre correspondant à la deuxième position (position intermédiaire) dans laquelle il laisse libre le déplacement du loquet 302 entre la position en prise et la position relâchée.

Le déplacement du dispositif de blocage 306 est également commandé par le système d'actionnement 154.

Chaque système d'accrochage 152 comporte également un élément de rappel 304 qui, en position libre du dispositif de blocage 306, force le loquet 302 vers la position en prise tout en l'autorisant à pivoter autour du premier axe de rotation 11. L'élément de rappel 304 est ici un ressort de traction fixé entre le châssis 101 et la première extrémité du loquet 302. La Fig. 4 montre un exemple d'un système d'actionnement 154 qui prend la forme d'une poignée 402 manipulable par un utilisateur et la poignée 402 est solidaire d'un arbre de poignée 403 monté mobile en rotation sur le châssis 101 autour d'un deuxième axe de rotation 12 (Fig. 5) par une liaison pivot avec le châssis 101. Le deuxième axe de rotation 12 est ici parallèle à la direction longitudinale X.

Pour assurer les trois positions stables de la poignée 402, le châssis 101 présente pour chaque position première, deuxième ou troisième, une découpe 402a-c dans laquelle la poignée 402 loge lorsqu'elle est dans ladite position. Pour être déplacée, la poignée 402 doit donc alors être décalée dans le sens de la direction longitudinale X pour sortir de la découpe 402a-c puis déplacée en rotation pour rejoindre une autre découpe 402a-c où elle est relâchée. Il y a ainsi une découpe 402a correspondant à la position verrouillée, une découpe 402b correspondant à la position intermédiaire et une découpe 402c correspondant à la position déverrouillée.

Le système de transmission 156 comporte un ensemble de bielles qui assurent le déplacement du loquet 302 en fonction du déplacement de la poignée 402.

Dans le mode de réalisation de l'invention représenté aux Figs. 3 et 5 à 10, le système de transmission 156 comporte une tige principale 308 qui est parallèle à la direction longitudinale X et mobile en rotation par rapport au châssis 101 autour d'un troisième axe de rotation 13 par une liaison pivot avec le châssis 101. Le troisième axe de rotation 13 est parallèle à la direction longitudinale X. La tige principale 308 s'étend sur une longueur suffisante pour actionner chaque système d'accrochage 152.

Chaque dispositif de blocage 306 comprend une barrette 306a solidaire de la tige principale 308 et qui est en appui contre le loquet 302 en première position de blocage (Fig. 6) et qui est à distance du loquet 302 en deuxième position de blocage et en position libre (Figs. 8 et 10). En première position de blocage/en prise, la barrette 306a pousse le loquet 302 contre la barre de fixation102b, c'est-à-dire qu'elle est arrangée du côté opposé à la barre de fixation102b par rapport au loquet 302.

Chaque dispositif de blocage 306 comprend également un dispositif d'entraînement 306b qui est arrangé entre le loquet 302 et la barrette 306a. Le dispositif d'entraînement 306b comporte au moins une biellette 306c, ici au nombre de deux disposées de part et d'autre de la barrette 306a et du loquet 302.

Chaque biellette 306c présente une première extrémité qui est montée mobile en rotation sur le loquet 302, autour d'un même quatrième axe de rotation 14 par une liaison pivot avec le loquet 302. Le quatrième axe de rotation 14 est ici parallèle à la direction longitudinale X.

Chaque biellette 306c présente une deuxième extrémité traversée par un trou oblong 306d et la barrette 306a présente un arbre 306e logé dans le trou oblong 306d. Le trou oblong 306d présente une première extrémité orientée vers le loquet 302 et une deuxième extrémité orientée vers la barrette 306a.

Le trou oblong 306d est arrangé de manière à ce qu'en première position de blocage, la barrette 306a est en appui contre le loquet 302 qui est en position en prise et que l'arbre 306e est du côté de la première extrémité, sans forcément l'atteindre, et de manière à ce qu'en position libre, la barrette 306a est à distance du loquet 302 et que l'arbre 306e est au niveau de la deuxième extrémité. Le trou oblong 306d permet ainsi un déplacement de la barrette 306a entre la première position et la position libre sans que le loquet 302 se déplace.

Un déplacement de la barrette 306a au-delà de la position libre vers la deuxième position de blocage va entraîner le déplacement du loquet 302 de la position en prise vers la position relâchée par entraînement du loquet 302 par la biellette 306c du fait que l'arbre 306e est au niveau de la deuxième extrémité et tire sur la biellette 306c.

Le fonctionnement est alors le suivant à partir d'une situation où les charges 102 sont sur le châssis 101.

Le système d'actionnement 154 est dans la première position (Fig. 5) et chaque système d'accrochage 152 est en position verrouillée (Fig. 6). Le loquet 302 est en position en prise et accroche la barre de fixation 102b de la charge 102 et il est bloqué dans cette position par la barrette 306a qui est dans la première position de blocage. La charge 102 est verrouillée et ne peut pas être soulevée du châssis 101 pour en être déchargée. De la même manière, il n'est pas possible de déposer une charge 102 sur le châssis 101.

Le système d'actionnement 154 est déplacé dans la deuxième position (Fig. 7) et chaque système d'accrochage 152 est en position intermédiaire (Fig. 8). Le loquet 302 reste en position en prise sous l'action de l'élément de rappel 304 et accroche la barre de fixation 102b de la charge 102 mais il n'est plus bloqué par la barrette 306a qui est dans la position libre. La charge 102 reste verrouillée et ne peut pas être soulevée du châssis 101 pour en être déchargée. Mais une charge 102 peut être déposée sur le châssis 101, car en descendant, la barre de fixation 102a va entrer en contact avec le loquet 302 et le déplacer vers la position relâchée pour passer en-dessous avant que le loquet 302 revienne en position en prise sous l'action de l'élément de rappel 304. Le déplacement du loquet 302 est possible du fait de la présence du trou oblong 306d qui permet le déplacement de la biellette 306c par rapport à l'arbre 306e.

Le système d'actionnement 154 est dans la troisième position (Fig. 9) et chaque système d'accrochage 152 est en position déverrouillée (Fig. 10). Le loquet 302 est en position relâchée et est donc écarté des barres de fixation 102b qui peuvent passer librement en montée et en descente. Le loquet 302 est bloqué dans cette position par la barrette 306a qui est dans la deuxième position de blocage par tirage sur la biellette 306c. Une charge 102 peut alors être librement chargée ou déchargée.

Le retour en position de départ s'effectue par déplacement de la poignée 402 dans la première position et l'élément de rappel 304 ramène le loquet 302 dans la position en prise. Bien sûr, il est possible de faire un arrangement inverse non représenté avec une biellette avec une première extrémité montée mobile en rotation sur la barrette autour d'un quatrième axe de rotation parallèle à la direction longitudinale X et une deuxième extrémité traversée par un trou oblong, où le loquet 302 présente un arbre logé dans le trou oblong.

Le trou oblong présente une première extrémité orientée vers le loquet 302 et une deuxième extrémité orientée vers la barrette 306a.

Le trou oblong est arrangé de manière à ce qu'en première position de blocage la barrette 306a est en appui contre le loquet 302 qui est en position en prise et que l'arbre 306e est du côté de la deuxième extrémité, sans forcément l'atteindre, et de manière à ce qu'en position libre, la barrette 306a est à distance du loquet 302 et que l'arbre est au niveau de la première extrémité. Le trou oblong permet ainsi un déplacement de la barrette 306a entre la première position et la position libre sans que le loquet 302 se déplace.

Un déplacement de la barrette 306a au-delà de la position libre vers la deuxième position de blocage va entraîner le déplacement du loquet 302 de la position en prise vers la position relâchée par entraînement du loquet 302 par la biellette 306c du fait que l'arbre est au niveau de la première extrémité et tire sur la biellette 306c.

Dans le mode de réalisation de l'invention présenté aux Figs. 5, 7 et 9, le système de transmission 156 comporte un jeu de bielles qui relie l'arbre de poignée 403 et la tige principale 308.

Le système de transmission 156 comporte une première bielle 502 dont une première extrémité est solidaire de l'arbre de poignée 403, une deuxième bielle 504 dont une première extrémité est solidaire de la tige principale 308 et une troisième bielle 506 dont une première extrémité est liée par une liaison pivot à la deuxième extrémité de la première bielle 502 et dont une deuxième extrémité est liée par une liaison pivot à la deuxième extrémité de la deuxième bielle 504, où les axes des deux liaisons pivot sont parallèles à la direction longitudinale X.

## Revendications

1. Plateau de transport (100) présentant une direction longitudinale (X) et comportant un châssis (101) sur lequel est arrangée une zone de stockage (50) pour au moins une charge (102) comportant au moins une barre de fixation (102b),
**caractérisé en ce que** le plateau de transport comporte en outre :
- pour la ou chaque barre de fixation (102b), au moins un système d'accrochage (152) mobile entre une position verrouillée dans laquelle le système d'accrochage (152) verrouille la barre de fixation (102b) en l'empêchant de se déplacer vers le haut ou vers le bas, une position intermédiaire dans laquelle le système d'accrochage (152) ne verrouille pas la barre de fixation (102b) en l'autorisant à se déplacer vers le bas mais en l'empêchant de se déplacer vers le haut, et une position déverrouillée dans laquelle le système d'accrochage (152) déverrouille la barre de fixation (102b) en l'autorisant à se déplacer vers le haut et vers le bas,
- un système d'actionnement (154) destiné à être actionné par un utilisateur et mobile entre une première position, une deuxième position et une troisième position, et
- un système de transmission (156) arrangé pour déplacer le ou chaque système d'accrochage (152) en position verrouillée lorsque le système d'actionnement (154) est en première position, en position intermédiaire lorsque le système d'actionnement (154) est en deuxième position et en position déverrouillée lorsque le système d'actionnement (154) est en troisième position.

2. Plateau de transport (100) selon la revendication 1, **caractérisé en ce que** chaque système d'accrochage (152) comporte un loquet (302), un élément de rappel (304) et un dispositif de blocage (306) commandé par le système d'actionnement (154), où le loquet (302) présente une première extrémité montée mobile en rotation sur le châssis (101) autour d'un premier axe de rotation (11) parallèle à la direction longitudinale (X) et une deuxième extrémité arrangée pour accrocher une barre de fixation (102b), où le loquet (302) est mobile entre une position en prise correspondant à la position verrouillée et une position relâchée correspondant à la position déverrouillée, où le dispositif de blocage (306) est mobile entre une première position de blocage correspondant à la première position dans laquelle il bloque le loquet (302) en position en prise, une deuxième position de blocage correspondant à la troisième position dans laquelle il bloque le loquet (302) en position relâchée, et une position libre correspondant à la deuxième position dans laquelle il laisse libre le déplacement du loquet (302) entre la position en prise et la position relâchée, et où, en position libre, l'élément de rappel (304) force le loquet (302) vers la position en prise.

3. Plateau de transport (100) selon la revendication 2, **caractérisé en ce que** le système de transmission (156) comporte une tige principale (308) mobile en rotation par rapport au châssis (101) autour d'un troisième axe de rotation (13) parallèle à la direction longitudinale (X), et **en ce que** chaque dispositif de blocage (306) comprend une barrette (306a) solidaire de la tige principale (308), un dispositif d'entraînement (306b) comportant au moins une biellette (306c) avec une première extrémité montée mobile en rotation sur le loquet (302) autour d'un quatrième axe de rotation (14) parallèle à la direction longitudinale (X) et une deuxième extrémité traversée par un trou oblong (306d), où la barrette (306a) présente un arbre (306e) logé dans le trou oblong (306d).

4. Plateau de transport (100) selon la revendication 2, **caractérisé en ce que** le système de transmission (156) comporte une tige principale (308) mobile en rotation par rapport au châssis (101) autour d'un troisième axe de rotation (13) parallèle à la direction longitudinale (X), et **en ce que** chaque dispositif de blocage (306) comprend une barrette (306a) solidaire de la tige principale (308), un dispositif d'entraînement comportant au moins une biellette avec une première extrémité montée mobile en rotation sur la barrette autour d'un quatrième axe de rotation parallèle à la direction longitudinale (X) et une deuxième extrémité traversée par un trou oblong, où le loquet présente un arbre logé dans le trou oblong.

5. Plateau de transport (100) selon l'une des revendications 1 à 4, **caractérisé en ce que** le système d'actionnement (154) est une poignée (402) montée mobile en rotation sur le châssis (101) autour d'un deuxième axe de rotation (12) parallèle à la direction longitudinale (X), et **en ce que** le châssis (101) présente pour chaque position première, deuxième ou troisième, une découpe (402a-c) dans laquelle la poignée (402) loge lorsqu'elle est dans ladite position.

## Patentansprüche

1. Transportplattform (100) mit einer Längsrichtung (X) und die Folgendes beinhaltet
- ein Gestell (101), auf dem ein Ladebereich (50) für wenigstens eine Ladung (102) angeordnet ist, die wenigstens eine Befestigungsstange (102b) aufweist,
**dadurch gekennzeichnet, dass** die Transportplattform ferner Folgendes beinhaltet:
- für die oder jede Befestigungsstange (102b) wenigstens ein Einhaksystem (152), das zwischen einer verriegelten Position, in der das Einhaksystem (152) die Befestigungsstange (102b) verriegelt, indem es sie daran hindert, sich nach oben oder nach unten zu bewegen, einer Zwischenposition, in der das Einhaksystem (152) die Befestigungsstange (102b) nicht verriegelt, indem es ihr gestattet, sich nach unten zu bewegen, sie jedoch daran hindert, sich nach oben zu bewegen, und einer entriegelten Position, in der das Einhaksystem (152) die Befestigungsstange (102b) entriegelt, indem es ihr gestattet, sich nach oben und nach unten zu bewegen, beweglich ist,
- ein Betätigungssystem (154), das zur Betätigung durch einen Benutzer bestimmt und zwischen einer ersten Position, einer zweiten Position und einer dritten Position beweglich ist, und
- ein Übertragungssystem (156), das dafür angeordnet ist, das oder jedes Einhaksystem (152) in die verriegelte Position zu bewegen, wenn sich das Betätigungssystem (154) in der ersten Position befindet, in die Zwischenposition zu bewegen, wenn sich das Betätigungssystem (154) in der zweiten Position befindet, und in die entriegelte Position zu bewegen, wenn sich das Betätigungssystem (154) in der dritten Position befindet.

2. Transportplattform (100) nach Anspruch 1, **dadurch gekennzeichnet, dass** jedes Einhaksystem (152) einen Riegel (302), ein Rückstellelement (304) und eine Sperrvorrichtung (306), die vom Betätigungssystem (154) gesteuert wird, beinhaltet, wobei der Riegel (302) ein erstes Ende, das an dem Gestell (101) um eine erste Drehachse (11) drehbeweglich angebracht ist, die parallel zur Längsrichtung (X) verläuft, und ein zweites Ende, das dafür angeordnet ist, eine Befestigungsstange (102b) einzuhaken, aufweist, wobei der Riegel (302) zwischen einer Eingriffsposition, die der verriegelten Position entspricht, und einer gelösten Position, die der entriegelten Position entspricht, beweglich ist, wobei die Sperrvorrichtung (306) zwischen einer ersten Sperrposition, die der ersten Position entspricht, in der sie den Riegel (302) in der Eingriffsposition sperrt, einer zweiten Sperrposition, die der dritten Position entspricht, in der sie den Riegel (302) in der gelösten Position sperrt, und einer freien Position, die der zweiten Position entspricht, in der sie die Bewegung des Riegels (302) zwischen der Eingriffsposition und der gelösten Position freigibt, beweglich ist, und wobei in der freien Position das Rückstellelement (304) den Riegel (302) hin zur Eingriffsposition zwängt.

3. Transportplattform (100) nach Anspruch 2, **dadurch gekennzeichnet, dass** das Übertragungssystem (156) eine Hauptstange (308) beinhaltet, die im Verhältnis zum Gestell (101) um eine dritte Drehachse (13) drehbeweglich ist, die parallel zur Längsrichtung (X) verläuft, und dadurch, dass jede Sperrvorrichtung (306) ein Glied (306a), das mit der Hauptstange (308) fest verbunden ist, eine Antriebsvorrichtung (306b) mit wenigstens einem Pleuel (306c) mit einem ersten Ende, das an dem Riegel (302) um eine vierte Drehachse (14) drehbeweglich angebracht ist, die parallel zur Längsrichtung (X) verläuft, und einem zweiten Ende, durch das ein Langloch (306d) verläuft, umfasst, wobei das Glied (306a) eine Welle (306e) aufweist, die in dem Langloch (306d) aufgenommen ist.

4. Transportplattform (100) nach Anspruch 2, **dadurch gekennzeichnet, dass** das Übertragungssystem (156) eine Hauptstange (308) beinhaltet, die im Verhältnis zum Gestell (101) um eine dritte Drehachse (13) drehbeweglich ist, die parallel zur Längsrichtung (X) verläuft, und dadurch, dass jede Sperrvorrichtung (306) ein Glied (306a), das mit der Hauptstange (308) fest verbunden ist, eine Antriebsvorrichtung mit wenigstens einem Pleuel mit einem ersten Ende, das an dem Glied um eine vierte Drehachse drehbeweglich angebracht ist, die parallel zur Längsrichtung (X) verläuft, und einem zweiten Ende, durch das ein Langloch verläuft, umfasst, wobei der Riegel eine Welle aufweist, die in dem Langloch aufgenommen ist.

5. Transportplattform (100) nach einem der Ansprüche 1 bis 4, **dadurch gekennzeichnet, dass** das Betätigungssystem (154) ein Griff (402) ist, der an dem Gestell (101) um eine zweite Drehachse (12) drehbeweglich angebracht ist, die parallel zur Längsrichtung (X) verläuft, und dadurch, dass das Gestell (101) für jede von der ersten, zweiten oder dritten Position einen Ausschnitt (402a-c) aufweist, in dem der Griff (402) aufgenommen ist, wenn er sich in der Position befindet.

## Claims

1. Transport tray (100) having a longitudinal direction (X), and comprising
- a frame (101) on which is arranged a storage area (50) for at least one load (102) comprising at least one fastening bar (102b),
**characterised in that** the transport tray further comprises:
- for the or each fastening bar (102b), at least one hooking system (152) movable between a locked position in which the hooking system (152) locks the fastening bar (102b) preventing it from moving upwards or downwards, an intermediate position in which the hooking system (152) does not lock the fastening bar (102b), allowing it to move downwards but preventing it from moving upwards, and an unlocked position in which the hooking system (152) unlocks the fastening bar (102b) allowing it to move upwards and downwards,
- an actuating system (154) to be actuated by a user and movable between a first position, a second position, and a third position, and
- a drive system (156) arranged to move the or each hooking system (152) to the locked position when the actuation system (154) is in the first position, to the intermediate position when the actuation system (154) is in the second position, and to the unlocked position when the actuation system (154) is in the third position.

2. Transport tray (100) according to claim 1, **characterised in that** each hooking system (152) comprises a latch (302), a return element (304), and a keeper device (306) controlled by the actuating system (154), wherein the latch (302) has a first end rotatably mounted on the frame (101) about a first axis of rotation (11) parallel to the longitudinal direction (X), and a second end arranged to hook a fastening bar (102b), wherein the latch (302) is movable between an engaged position corresponding to the locked position, and a released position corresponding to the unlocked position, wherein the keeper device (306) is movable between a first locking position corresponding to the first position in which it locks the latch (302) in the engaged position, a second locking position corresponding to the third position in which it locks the latch (302) in the released position, and a free position corresponding to the second position in which it allows the latch (302) to move freely between the engaged position and the released position, and wherein, in the free position, the return element (304) forces the latch (302) towards the engaged position.

3. Transport tray (100) according to claim 2, **characterised in that** the drive system (156) comprises a main rod (308) rotatable relative to the frame (101) about a third axis of rotation (13) parallel to the longitudinal direction (X), and **in that** each keeper device (306) comprises a bar (306a) integral with the main rod (308), a driving device (306b) comprising at least one connecting rod (306c) with a first end rotatably mounted on the latch (302) around a fourth axis of rotation (14) parallel to the longitudinal direction (X), and a second end through which an oblong hole (306d) passes, wherein the bar (306a) has a shaft (306e) housed in the oblong hole (306d).

4. Transport tray (100) according to claim 2, **characterised in that** the drive system (156) comprises a main rod (308) rotatable relative to the frame (101) about a third axis of rotation (13) parallel to the longitudinal direction (X), and **in that** each keeper device (306) comprises a bar (306a) integral with the main rod (308), a driving device comprising at least one connecting rod with a first end rotatably mounted on the bar around a fourth axis of rotation parallel to the longitudinal direction (X), and a second end through which an oblong hole passes, wherein the latch has a shaft housed in the oblong hole.

5. Transport tray (100) according to one of claims 1 to 4, **characterised in that** the actuating system (154) is a handle (402) rotatably mounted on the frame (101) about a second axis of rotation (12) parallel to the longitudinal direction (X), and **in that** the frame (101) has, for each first, second or third position, a cut-out (402a-c) in which the handle (402) is housed when in said position.
